# FASCICULE DE BREVET EUROPEEN

(11) **EP 0 889 568 B1**
(45) Date de publication et mention de la délivrance du brevet: **17.09.2003**
(21) Numéro de dépôt: 98401603.0
(22) Date de dépôt: 26.06.1998
(51) Int. Cl.: H02G 7/05

(54) **Pince de suspension, notamment pour ligne électrique aérienne, et suspension comportant une telle pince**
Halteklammer, insbesondere für elektrische Freileitung, und Aufhängung mit einer solchen Klammer
Suspension clamp, especially for electrical overhead line, and support using such a clamp

(30) Priorité: 01.07.1997 FR 9708263
(43) Date de publication de la demande: 07.01.1999
(73) Titulaire: S I C A M E SOCIETE INDUSTRIELLE DE CONSTRUCTION D'APPAREILS ET DE MATERIEL ELECTRIQUES, F-19230 Arnac Pompadour (FR)
(72) Inventeur: François, Pierre, 87100 Limoges (FR); Saurina, Michel, 19230 Pompadour (FR)
(74) Mandataire: Santarelli

(56) Documents cités:
- WO-A-94/26012
- WO-A-97/07579
- US-A- 3 155 354

## Description

La présente invention concerne d'une manière générale les suspensions de type de celles mises en oeuvre par exemple pour le soutien de lignes électriques aériennes.

Elle vise plus particulièrement le cas où, appartenant à un réseau de distribution d'énergie électrique basse tension, la ligne électrique aérienne à soutenir est formée de quatre câbles isolés torsadés entre eux, à savoir trois câbles de phase et un câble de neutre.

Les suspensions assurant le soutien d'une telle ligne électrique aérienne au droit de chacun des poteaux entre lesquels celle-ci est établie comportent, globalement, un support, qui est fixé à un tel poteau, qu'il s'agisse par exemple d'une console ou d'un crochet, et une pince de suspension, qui est adaptée à recevoir cette ligne électrique aérienne, et qui est suspendue au support, soit directement, notamment si ce support est un crochet, soit indirectement, par exemple par l'intermédiaire d'une manille, notamment s'il s'agit au contraire d'une console.

Une suspension de ce type se trouve par exemple décrite dans le document FR-A-2 478 246.

Jusqu'à ce jour, les suspensions de ce type ne sont mises en oeuvre que pour le seul soutien de la ligne électrique aérienne concernée, à l'exclusion du tirage nécessaire à sa mise en place.

De fait, ce tirage se fait à ce jour à l'aide de poulies de déroulage, qui sont rapportées de manière provisoire sur les poteaux, à raison d'une par poteau, en dessous des pinces de suspension correspondantes, et ce n'est qu'ensuite que la ligne électrique aérienne est passée de ces poulies de déroulage à ces pinces de suspension.

Les poulies de déroulage ainsi mises en oeuvre, qui sont spécialement adaptées à leur fonction et présentent de ce fait une chape ouvrante, sont relativement complexes et lourdes.

Elles nécessitent donc un investissement non négligeable, tant pour leur fabrication que pour leur entretien, et, aussi bien à la pose qu'à la dépose, leur mise en oeuvre est elle-même relativement coûteuse en personnel.

Il s'avère de ce fait souhaitable de pouvoir s'affranchir d'une partie au moins de ces poulies de déroulage, étant entendu que celles intervenant aux extrémités de la ligne électrique aérienne à poser, c'est-à-dire, d'une part, celle intervenant immédiatement en aval du touret de déroulage initial, et, d'autre part, celle intervenant immédiatement en amont du cabestan de tirage terminal, ne peuvent normalement qu'être conservées.

Par ailleurs, l'engagement d'une ligne électrique aérienne dans la pince de suspension d'une des suspensions en cause ne concerne à ce jour que l'un des câbles qui constituent cette ligne électrique aérienne, en l'espèce son câble de neutre, celui-ci faisant ainsi ensuite office de câble porteur pour les câbles de phase auxquels il est associé.

Il s'avère maintenant souhaitable qu'une telle pince de suspension puisse recevoir l'ensemble des câbles de la ligne électrique aérienne à soutenir.

La présente invention a tout d'abord pour objet une pince de suspension, qui, apte à recevoir l'ensemble des câbles d'une ligne électrique aérienne, est également apte à un tirage de celle-ci, et est ainsi avantageusement susceptible d'être substituée à une poulie de déroulage ; elle a encore pour objet toute suspension comportant une telle pince de suspension.

Le document WO-A-94 26 012 décrit une pince de suspension, notamment pour ligne électrique aérienne, du genre comportant une partie supérieure, par laquelle elle est adaptée à être suspendue à un support, et une partie inférieure, par laquelle elle est adaptée à recevoir une partie au moins de la ligne électrique aérienne à suspendre, cette partie inférieure ayant une section transversale ouverte et formant, en dessous de son ouverture, un berceau allongé, avec, associé à ce berceau, une bride de fermeture, qui, montée pivotante autour d'un axe parallèle à la direction d'allongement du berceau, est apte à fermer à la demande la section transversale de la partie inférieure, en s'étendant alors de l'une à l'autre des deux extrémités de celle-ci, laissant alors à la ligne électrique aérienne toute liberté de coulissement, la bride de fermeture comportant en sus un ensemble de serrage.

Selon l'invention, une pince de suspension du genre ci-dessus est caractérisée en ce que ledit ensemble de serrage est monté pivotant autour d'un second axe parallèle à la direction d'allongement du berceau.

La bride de fermeture ainsi prévue suivant l'invention permet avantageusement, d'abord, d'ouvrir la partie inférieure de la pince de suspension, ce qui permet d'y mettre en place la ligne aérienne électrique à dérouler, puis, avant le tirage de celle-ci, de fermer cette partie inférieure, ce qui permet d'éviter que la ligne électrique aérienne en cours de tirage échappe intempestivement à cette dernière.

Mais, à la différence de l'ensemble de serrage du genre ci-dessus, la bride de fermeture suivant l'invention intervient avantageusement à distance de la ligne électrique aérienne en cours de tirage, en laissant ainsi à celle-ci toute la liberté de coulissement nécessaire à son bon déroulage.

Ce n'est que lorsque le tirage est achevé que l'ensemble de serrage associé à la bride de fermeture est à son tour mis en oeuvre pour assurer le maintien de la ligne électrique aérienne ainsi posée.

Préférentiellement, des moyens d'emboîtement sont prévus de manière complémentaire sur fa pince de suspension et sur la bride de fermeture, pour coopération en engagement relatif de ces moyens d'emboîtement les uns avec les autres lorsque la bride de fermeture est en position de fermeture.

En coopération avec une vis de serrage sous le contrôle de laquelle est la bride de fermeture, il est ainsi assuré, de manière très simple, mais très efficace, tant transversalement, que longitudinalement, un verrouillage ferme et sûr de la bride de fermeture sur la pince de suspension lorsque cette bride de fermeture est en position de fermeture.

La sécurité du déroulage à effectuer est ainsi dûment assurée.

Préférentiellement, également, le berceau que forme la partie inférieure de la pince de suspension suivant l'invention va en s'évasant à chacune de ses extrémités, tant pour faciliter le déroulage d'une ligne électrique aérienne en cours de tirage que pour s'adapter au mieux à la forme naturelle de celle-ci après ce tirage, en ménageant ainsi dans l'un et l'autre cas cette ligne électrique aérienne.

Préférentiellement, encore, la pince de suspension suivant l'invention est réalisée en matière synthétique isolante, comme la manille éventuellement susceptible d'intervenir entre elle et le support auquel l'ensemble est suspendu, ce qui est favorable à un bon isolement de la ligne électrique aérienne concernée par rapport à ce support, tout en permettant éventuellement de tirer parti d'une relative élasticité de cette matière synthétique isolante pour faciliter la réalisation et/ou le montage de certains des constituants en jeu, ce montage pouvant en effet impliquer par exemple ainsi un certain encliquetage.

Enfin, par la possibilité qu'elle a de pouvoir être suspendue indifféremment à une console ou à un crochet, et par la capacité qu'offre son ensemble de serrage à s'adapter à des diamètres de lignes électriques aériennes différents, la pince de suspension suivant l'invention convient avantageusement de manière quasi universelle à de nombreuses situations.

Les caractéristiques et avantages de l'invention ressortiront d'ailleurs de la description qui va suivre, à titre d'exemple, en référence aux dessins schématiques annexés sur lesquels :
la figure 1 est une vue en perspective d'une suspension comportant une pince de suspension suivant l'invention ;
la figure 2 en est une vue partie en élévation, et partie en coupe transversale, suivant la ligne II-II de la figure 1 ;
la figure 3 est une vue en perspective de la pince de suspension suivant l'invention, vue de l'avant ;
la figure 4 est une vue en perspective de cette pince de suspension, vue de l'arrière ;
la figure 5 en est, à échelle différente, une vue partielle en coupe longitudinale, suivant la ligne V-V de la figure 3 ;
la figure 6 est une vue en perspective de la bride de fermeture équipant suivant l'invention cette pince de suspension, vue de l'avant ;
la figure 7 est une vue en perspective de cette bride de fermeture, vue de l'arrière ;
la figure 8 est une vue en perspective de l'ensemble de serrage équipant également cette pince de suspension, vu de l'avant ;
la figure 9 est une vue en perspective de cet ensemble de serrage, vu de l'arrière ;
la figure 10 est une vue en perspective de la vis de serrage sous le contrôle de laquelle se trouvent la bride de fermeture et l'ensemble de serrage de la pince de suspension suivant l'invention ;
les figures 11A, 11B, 11C sont, à échelle inférieure, des vues partielles en élévation-coupe, qui, analogues à celle de la figure 2, illustrent diverses phases successives de mise en oeuvre de la pince de suspension suivant l'invention, pour un diamètre donné de la ligne électrique aérienne concernée ;
la figure 12 est une vue partielle en élévation-coupe analogue à celle de la figure 11C, pour un autre diamètre de cette ligne électrique aérienne ;
la figure 13 est une vue partielle en perspective qui, analogue à celle de la figure 4, concerne une variante de réalisation de la pince de suspension suivant l'invention ;
la figure 14 est une vue en perspective qui, analogue à celle de la figure 1, se rapporte à une variante de réalisation, vue de l'arrière ;
la figure 15 est, à la manière de la figure 2, une vue partie en élévation, et partie en coupe transversale, suivant la ligne XV-XV de la figure 14, de cette variante de réalisation ;
la figure 16 est une vue en perspective qui, analogue à celle de la figure 3, se rapporte à la pince de suspension mise en oeuvre dans cette variante de réalisation ;
la figure 17 est une vue en perspective qui, analogue à celle de la figure 7, se rapporte, elle, à la bride de fermeture ;
la figure 18 est une vue partielle en perspective qui, analogue à celles des figures 3 et 16, se rapporte à une autre variante de réalisation de la pince de suspension suivant l'invention.

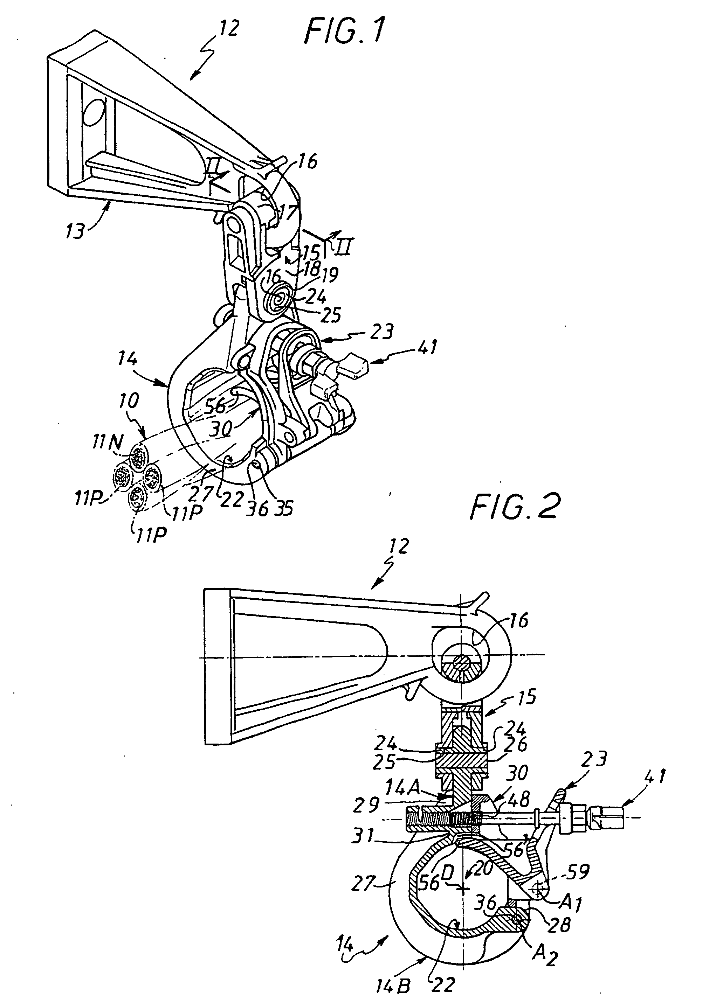

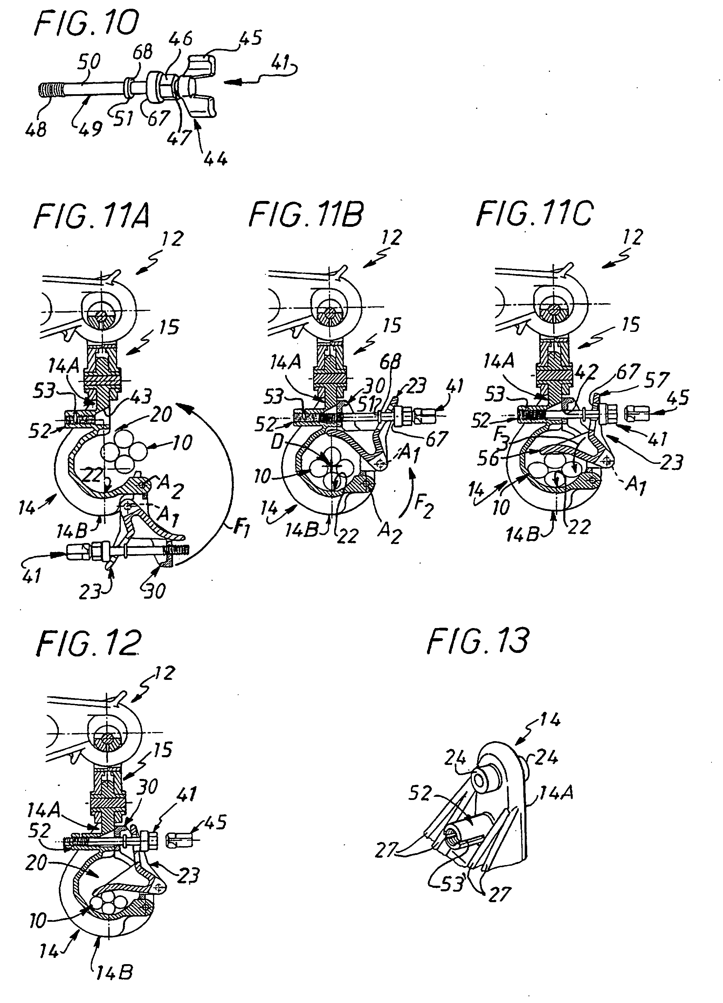

Tel que schématisé en traits interrompus sur la figure 1, et tel que représenté en traits continus sur les figures 11A, 11B, 11C et 12, il s'agit, globalement, d'assurer, localement, le soutien d'une ligne électrique aérienne 10, qui, dans les formes de mise en oeuvre représentées, est formée de quatre câbles 11P, 11N dûment torsadés entre eux, à savoir trois câbles de phase 11P et un câble de neutre 11N.

Pour le soutien local de cette ligne électrique aérienne 10, il est mis en oeuvre, de manière connue en soi, sur chacun des poteaux concernés, non représentés, une suspension 12.

De manière connue en soi, également, cette suspension 12 comporte un support 13, qui est adapté à être fixé au poteau correspondant, et une pince de suspension 14, qui est suspendue à ce support 13, soit directement, soit indirectement.

Dans les formes de réalisation plus particulièrement représentées sur les figures 1 à 17, le support 13 est une console, et la pince de suspension 14 lui est suspendue indirectement, par l'intermédiaire d'une manille 15.

Un tel support 13 et une telle manille 15 étant bien connus par eux-mêmes, notamment par le brevet français No 80 05609 mentionné ci-dessus, et, ne relevant pas en propre de la présente invention, ils ne seront pas décrits en détail ici.

S'agissant du support 13, il suffira d'indiquer qu'il comporte un oeillet 16 pour l'accrochage de la manille 15.

S'agissant de la manille 15, qui est une manille ouvrante, il suffira d'indiquer qu'elle forme, à sa partie haute, un axe 17, pour son accrochage au support 13, et, à sa partie basse, une chape 18 ajourée transversalement d'un perçage 19, pour l'accrochage de la pince de suspension 14.

De manière connue en soi, la pince de suspension 14 comporte, globalement, une partie supérieure 14A, par laquelle elle est adaptée à être suspendue à un support, en l'espèce le support 13 par l'intermédiaire de la manille 15, et une partie inférieure 14B, par laquelle elle est adaptée à recevoir une partie au moins de la ligne électrique aérienne 10 à suspendre, en l'espèce, la totalité de celle-ci, cette partie inférieure 14B ayant une section transversale ouverte latéralement à sa partie haute et formant, à sa partie basse, en dessous de son ouverture 20, un berceau 22 allongé, avec, associé à ce berceau 22, suivant des dispositions décrites plus en détail ultérieurement, un ensemble de serrage 23 monté pivotant autour d'un axe A1 parallèle à la direction d'allongement D de ce berceau 22.

L'axe de pivotement A1 de l'ensemble de serrage 23 et la direction d'allongement D du berceau 22 sont schématisés par leur trace sur les figures 2 et 11B.

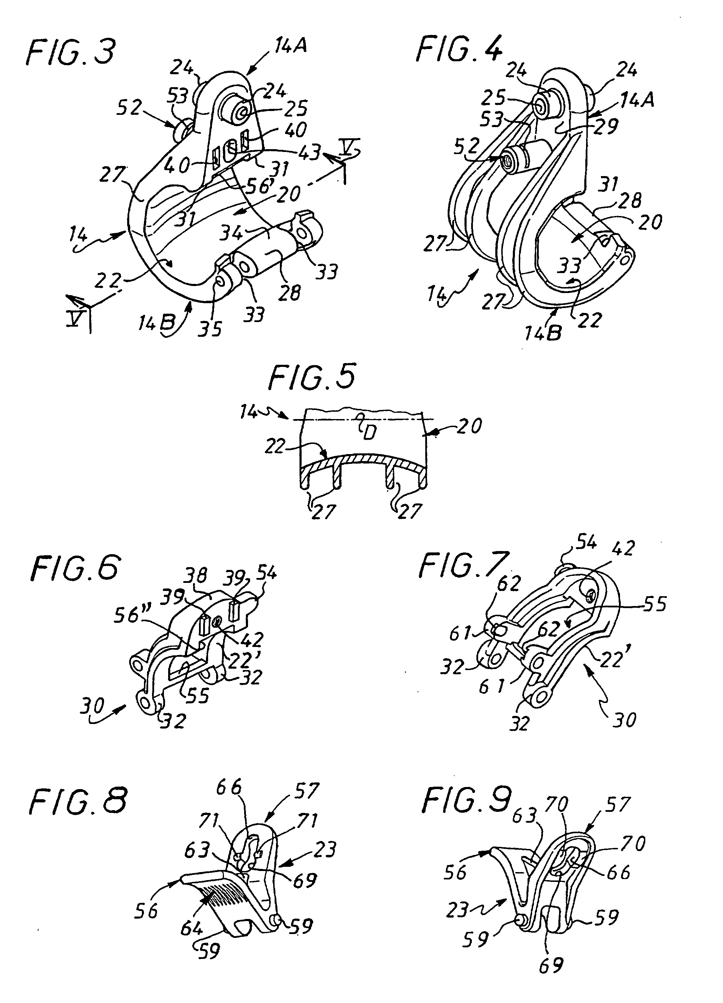

En outre, la direction d'allongement D du berceau 22 est schématisée en traits interrompus sur la figure 5.

Dans les diverses formes de réalisation représentées, la partie supérieure 14A de la pince de suspension 14 se présente sous la forme d'une patte sensiblement plane, qui s'étend sensiblement parallèlement à la direction d'allongement D du berceau 22, suivant sensiblement le plan longitudinal médian de celui-ci.

Pour coopération en pivotement avec le perçage 19 de la manille 15, elle porte, dos à dos, sensiblement transversalement par rapport à la direction d'allongement D du berceau 22, deux tourillons 24.

Dans les formes de réalisation représentées, ces tourillons 24 sont creusés d'un alésage 25 qui leur est commun, et un axe de renfort 26 s'étend intérieurement de l'un à l'autre d'entre eux, figure 2.

Dans les diverses formes de réalisation représentées, la partie inférieure 14B de la pince de suspension 14 a, en section transversale, un contour sensiblement circulaire, et son ouverture 20 occupe sensiblement un quart supérieur de ce contour.

Extérieurement, cette partie inférieure 14B est renforcée par des nervures transversales 27, qui s'étendent en continu de son extrémité libre 28 à la face 29 de la partie supérieure 14A opposée à cette dernière, en se raccordant en triangle à cette face 29.

Préférentiellement, et ainsi qu'il est mieux visible sur la figure 5, le berceau 22 qu'elle forme va en s'évasant à chacune de ses extrémités.

Dans les diverses formes de réalisation représentées, la partie supérieure 14A et la partie inférieure 14B de la pince de suspension 14 sont d'un seul tenant l'une avec l'autre, l'ensemble venant d'une seule et même pièce par moulage d'une matière synthétique isolante à haute résistance mécanique.

L'axe de renfort 26 est, lui, préférentiellement métallique.

Suivant l'invention, la pince de suspension 14 comporte, en sus de l'ensemble de serrage 23, une bride de fermeture 30, qui, montée pivotante, elle aussi, autour d'un axe A2 parallèle à la direction d'allongement D du berceau 22, est apte à fermer à la demande la section transversale de la partie inférieure 14B, en s'étendant, alors, à travers l'ouverture 20 de cette partie inférieure 14B, de l'une à l'autre des deux extrémités de celle-ci, c'est-à-dire de l'extrémité libre 28 de cette partie inférieure 14B à l'extrémité 31 par laquelle elle se raccorde à la partie supérieure 14A.

A l'image de l'ouverture 20 de la partie inférieure 14B, la bride de fermeture 30 s'étend sensiblement suivant un quart de cercle, en formant ainsi une voûte 22', pour compléter, en position de fermeture, la section transversale de cette partie inférieure 14B.

Dans les diverses formes de réalisation représentées, la bride de fermeture 30 est articulée à la partie inférieure 14B le long de l'extrémité libre 28 de celle-ci.

Dans la forme de réalisation plus particulièrement représentée sur les figures 1 à 12, l'ouverture 20 de la partie inférieure 14B de la pince de suspension 14 s'étend du côté de celle-ci opposé au support 13, et il en est donc de même pour la bride de fermeture 30.

Pour son articulation, la bride de fermeture 30 comporte, latéralement, à son extrémité concernée, deux oreilles 32, par lesquelles elle est insérée, à la manière d'une chape, dans deux fentes 33 prévues en correspondance à cet effet au travers d'un bourrelet arrondi 34 épaississant l'extrémité libre 28 de la partie inférieure 14B, l'ensemble étant creusé, longitudinalement, d'un alésage 35, pour la mise en place d'un axe 36 qui matérialise son axe de pivotement A2.

Comme l'axe de renfort 26, cet axe 36 est de préférence métallique.

A son extrémité libre, c'est-à-dire à son extrémité opposée à ses oreilles 32, la bride de fermeture 30 comporte, dans la forme de réalisation représentée, une patte d'appui 38, par laquelle elle est apte à être appliquée contre la partie supérieure 14A de la pince de suspension 14 en position de fermeture.

Suivant l'invention, des moyens d'emboîtement 39, 40 sont prévus de manière complémentaire sur la pince de suspension 14 et sur la bride de fermeture 30, pour coopération en engagement relatif de ces moyens d'emboîtement 39, 40 les uns avec les autres lorsque la bride de fermeture 30 est en position de fermeture.

Dans la forme de réalisation représentée, ces moyens d'emboîtement 39, 40 comportent, en saillie sur la patte d'appui 38 de la bride de fermeture 30, au moins un bossage 39, et, en creux sur la partie supérieure 14A de la pince de suspension 14, au moins une cavité 40, qui, disposée en correspondance avec le bossage 39, est apte à recevoir celui-ci.

Préférentiellement, et cela est le cas dans les formes de réalisation représentées, les moyens d'emboîtement 39, 40 comportent, disposés à distance l'un de l'autre, sur la patte d'appui 38 de la bride de fermeture 30, deux bossages 39, et, en correspondance, sur la partie supérieure 14A de la pince de suspension 14, deux cavités 40.

Par exemple, et tel que représenté, ces bossages 39, et les cavités 40, sont alignés parallèlement à la direction d'allongement D du berceau 22, et ils ont, en plan, un contour quadrangulaire.

Dans les diverses formes de réalisation représentées, la bride de fermeture 30 est sous le contrôle d'une vis de serrage 41, qui, disposée transversalement par rapport à la direction d'allongement D du berceau 22, est apte à en assurer à la demande le maintien en position de fermeture.

Cette vis de serrage 41 traverse, d'une part, la patte d'appui 38, à la faveur d'un perçage 42 prévu à cet effet dans celle-ci, entre ses bossages 39, et, d'autre part, la partie supérieure 14A de la pince de suspension 14, à la faveur d'un perçage 43 également prévu à cet effet dans celle-ci.

En pratique, la vis de serrage 41 est la même dans les diverses formes de réalisation représentées. Préférentiellement, et tel que représenté, la tête 44 de cette vis de serrage 41 comporte, à distance l'un de l'autre, deux organes de commande en rotation 45, 46 séparés l'un de l'autre par une zone frangible 47.

Par exemple, l'organe de commande en rotation 45 qui est celui disposé à l'extrémité libre de la tête 44 est du genre écrou papillon.

Corollairement, l'organe de commande en rotation 46 est du genre écrou à six pans.

Par ailleurs, dans la forme de réalisation représentée, le tronçon fileté 48 du fût 49 de la vis de serrage 41 ne s'étend qu'à son extrémité libre, et, pour des raisons qui apparaîtront ci-après, le tronçon lisse 50 de ce fût 49 présente, transversalement, entre la tête 44 et ce tronçon fileté 48, à distance de la tête 44, une collerette 51.

La vis de serrage 41 ainsi constituée peut par exemple être réalisée en matière synthétique isolante.

Dans la forme de réalisation plus particulièrement représentée sur les figures 1 à 12, la tête 44 de la vis de serrage 41 intervient du même côté de la partie supérieure 14A de la pince de suspension 14 que la bride de fermeture 30, son fût 49 traverse cette dernière, et, pour coopération avec le tronçon fileté 48 de ce fût 49, la partie supérieure 14A de la pince de suspension 14 comporte, en correspondance, au-delà de son perçage 43, une cheminée de vissage 52.

En pratique, la vis de serrage 41 traverse par son fût 49 la bride de fermeture 30, à la faveur du perçage 42 de celle-ci, et, dans la forme de réalisation représentée, ce perçage 42 est taraudé, pour une coopération en vissage, avec lui, du tronçon fileté 48 de ce fût 49, du côté de la tête 44 de la vis de serrage 41.

Pour faciliter l'engagement de la vis de serrage 41, le perçage 43 de la partie supérieure 14A de la pince de suspension 14 est, préférentiellement, et tel que représenté, évasé en tronc de cône à sa partie haute.

La cheminée de vissage 52 qui fait suite à ce perçage 43 fait saillie sur la face 29 de la partie supérieure 14A de la pince de suspension 14 opposée à la bride de fermeture 30.

Préférentiellement, et tel que représenté, cette cheminée de vissage 52 est ouverte localement par au moins une fente 53, pour que soit ainsi constitué un frein s'opposant à un dévissage inopiné de la vis de serrage 41.

Par exemple, et tel que représenté sur les figures 1 à 12, seule une fente 53 est prévue, et celle-ci intervient transversalement par rapport à l'axe de la cheminée de vissage 52.

Dans les diverses formes de réalisation représentées, la bride de fermeture 30 est équipée d'une patte de préhension 54, pour en faciliter la manipulation.

Par exemple, et tel que représenté, cette patte de préhension 54 fait saillie latéralement, parallèlement à la direction d'allongement D du berceau 22.

Dans la forme de réalisation plus particulièrement représentée sur les figures 1 à 12, l'ensemble de serrage 23 est articulé à la bride de fermeture 30, et traverse celle-ci à la faveur d'une ouverture 55 prévue à cet effet dans cette dernière.

Cet ensemble de serrage 23 comporte, en V, un patin de serrage 56 et un levier de commande 57, et, pour son montage pivotant, c'est-à-dire, en l'espèce, pour son articulation à la bride de fermeture 30, il comporte, latéralement, dos à dos, dans la zone de convergence de ce patin de serrage 56 et de ce levier de commande 57, deux tourillons 59 par lesquels il est en prise à rotation avec des oreilles 61 que la bride de fermeture 30 présente, en correspondance, en bordure de son ouverture 55.

En pratique, les oreilles 61 que la bride de fermeture 30 présente ainsi pour l'articulation de l'ensemble de serrage 23 font saillie à son dos et elles sont relativement proches des oreilles 32 qu'elle présente par ailleurs pour sa propre articulation à la partie inférieure 14B de la pince de suspension 14.

Préférentiellement, et cela est le cas dans la forme de réalisation représentée, les oreilles 61 de la bride de fermeture 30 présentent chacune, localement, une échancrure 62, permettant une mise en place de l'ensemble de serrage 23 par simple encliquetage.

Intérieurement, le patin de serrage 56 de l'ensemble de serrage 23 et le levier de commande 57 de celui-ci sont reliés transversalement l'un à l'autre par une nervure 63, pour'leur renfort.

Extérieurement, le patin de serrage 56 présente, transversalement, en saillie, un réseau de nervures 64, pour être mieux en mesure d'agripper la ligne électrique aérienne 10 à serrer.

En pratique, l'ensemble de serrage 23 est le même dans les diverses formes de réalisation représentées, et il est sous le contrôle de la même vis de serrage 41 que la bride de fermeture 30, le fût 49 de cette vis de serrage 41 traversant librement son levier de commande 57 à la faveur d'un perçage 66 prévu à cet effet dans celui-ci, en présentant, de part et d'autre de ce levier de commande 57, pour son entraînement dans les deux sens, deux épaulements 67, 68.

En pratique, l'épaulement 67 est formé par l'organe de commande en rotation 46, et l'épaulement 68 par la collerette 51.

Pour permettre le basculement de l'ensemble de serrage 23, le perçage 66 du levier de commande 57 de celui-ci est allongé en boutonnière, transversalement par rapport à son axe de pivotement A2, et, pour permettre le passage initial de la collerette 51 de la vis de serrage 41, ce perçage 66 est en trou de serrure.

Autrement dit, il présente, à l'une de ses extrémités, un élargissement 69 de diamètre supérieur à celui de la collerette 51 de la vis de serrage 41.

Préférentiellement, et cela est le cas dans la forme de réalisation représentée, le levier de commande 57 de l'ensemble de serrage 23 présente, en saillie, sur l'une et l'autre de ses faces, en bordure de son perçage 66, des bossages arrondis 70, 71, pour coopération en contact avec, respectivement, les épaulements 67, 68 de la vis de serrage 41.

Préférentiellement, enfin, et cela est le cas dans les formes de réalisation représentées, il est prévu, à la base de la partie supérieure 14A, de la pince de suspension 14, un dégagement 56', qui échancre l'extrémité 31 correspondante de sa partie inférieure 14B, dans la zone médiane de cette extrémité 31, et qui est propre à recevoir transversalement l'ensemble de serrage 23, et, plus précisément, l'extrémité du patin de serrage 56 de celui-ci.

La largeur de ce dégagement 56' est donc au moins égale à celle de ce patin de serrage 56, et sa hauteur est au moins égale à l'épaisseur de ce dernier.

Corollairement, il est prévu, sur la bride de fermeture 30, à la base de sa patte d'appui 38, en continuité avec son ouverture 55, un dégagement 56" de même type, c'est-à-dire un dégagement propre à recevoir transversalement l'ensemble de serrage 23, et, plus précisément, l'extrémité du patin de serrage 56 de celui-ci.

La suspension 12 suivant l'invention est préférentiellement livrée toute montée à ses utilisateurs, avec son support 13, sa manille 15 et sa pince de suspension 14, tel que représenté à la figure 1.

Pour sa mise en oeuvre, il convient tout d'abord de la fixer à un poteau.

Il est procédé ensuite comme suit.

Dans un premier temps, dit de préparation, au cours duquel la pince de suspension 14 est en position d'ouverture, il est agi en dévissage sur la vis de serrage 41 de manière à ce que le tronçon fileté 48 de son fût 49 vienne en prise avec le perçage 42, taraudé à cet effet, de la bride de fermeture 30.

Il en résulte l'exercice d'une traction sur le levier de commande 57 de l'ensemble de serrage 23, par la collerette 51 du tronçon lisse 50 de ce fût 49, celle-ci portant par l'épaulement 68 sur les bossages 71 de ce levier de commande 57, et l'ensemble de serrage 23 bascule alors autour de son axe de pivotement A1 dans un sens qui conduit l'extrémité de son patin de serrage 56 à pénétrer dans le dégagement 56" prévu à cet effet à la base de la patte d'appui 38 de la bride de fermeture 30.

Le dévissage de la vis de serrage 41 est ainsi poursuivi jusqu'à ce que, entièrement encastré dans ce dégagement 56", et, donc, escamoté dans celui-ci, le patin de serrage 56 laisse entièrement dégagée la voûte 22' de la bride de fermeture 30, figure 11A.

La bride de fermeture 30 est ensuite laissée en position d'ouverture, pour permettre d'engager, dahs la partie inférieure 14B de la pince de suspension 14, à la faveur de l'ouverture 20 de celle-ci, la ligne électrique aérienne 10 à soutenir, tel que schématisé par une flèche F1 sur la figure 11A.

Dans un deuxième temps, figure 11B, la bride de fermeture 30 est amenée en position de fermeture, par basculement autour de son axe de pivotement A2, tel que schématisé par une flèche F2 sur cette figure 11B.

La bride de fermeture 30 vient alors s'appliquer par sa patte d'appui 38 contre la partie supérieure 14A de la pince de suspension 14, avec un engagement relatif les uns dans les autres des moyens d'emboîtement 39, 40 prévus entre cette bride de fermeture 30 et la pince de suspension 14.

Conjointement, l'extrémité du patin de serrage 56 de l'ensemble de serrage 23 pénètre dans le dégagement 56' prévu à cet effet à la base de la partie supérieure 14A de la pince de suspension 14, ce qui vient avantageusement parfaire le verrouillage tant transversal que longitudinal de la bride de fermeture 30 sur celle-ci.

La vis de serrage 41 est ensuite légèrement vissée dans la cheminée de vissage 52, comme représenté sur la figure 11B.

Par construction, il est fait en sorte que, la longueur axiale du tronçon fileté 48 du fût 49 de la vis de serrage 41 soit suffisante pour que, pour la position de simple fermeture de l'ensemble représentée sur cette figure 11 B, ce tronçon fileté 48 soit en prise à la fois avec la cheminée de vissage 52 de la partie supérieure 14A de la pince de suspension 14, du côté de son extrémité libre, et à la fois avec le perçage 42 taraudé de la bride de fermeture 30, du côté de la tête 44 de la vis de serrage 41, de manière à maintenir en position d'effacement dans les dégagements 56', 56" le patin de serrage 56 de l'ensemble de serrage 23 tout en assurant conjointement un maintien en position de fermeture de la bride de fermeture 30 sur cette pince de suspension 14.

Ainsi, pour cette position de simple fermeture, le volume interne de la pince de suspension 14 est totalement dégagé.

La ligne électrique aérienne 10, qui repose par simple gravité sur le berceau 22 formé par la partie inférieure 14B de la pince de suspension 14, peut alors coulisser librement, par tirage, dans ce berceau 22, suivant la direction d'allongement D de celui-ci.

Une fois l'ensemble stabilisé, le vissage de la vis de serrage 41 est repris.

Par son épaulement 67, cette vis de serrage 41 entraîne alors le levier de commande 57 de l'ensemble de serrage 23, ce qui, par basculement de celui-ci autour de son axe de pivotement A1, tel que schématisé par la flèche F3 sur la figure 11C, conduit son patin de serrage 56 à venir porter sur la ligne électrique aérienne 10, puis à appliquer énergiquement celle-ci contre le fond du berceau 22, tel que représenté à la figure 11C pour une ligne électrique aérienne 10 de relativement grand diamètre.

Suivant le diamètre de la ligne électrique aérienne 10 à suspendre, et tel que schématisé par les figures 11C et 12, le vissage de la vis de serrage 41 est plus ou moins prononcé.

Dans tous les cas, le couple à appliquer sur la vis de serrage 41 augmente au fur et à mesure du serrage de la ligne électrique aérienne 10.

Au-delà d'un certain couple, contrôlé par la zone frangible 47 de la vis de serrage 41, l'organe de commande en rotation 45 de celle-ci se détache de lui-même, comme représenté sur les figures 11C et 12.

Le serrage de la ligne électrique aérienne 10 est alors considéré comme satisfaisant.

Du fait des dispositions adoptées, la tête 44 de la vis de serrage 41 intervient du côté de la pince de suspension 14 opposé au support 13, et la manipulation de cette vis de serrage 41 se trouve ainsi avantageusement facilitée.

Par action sur cette vis de serrage 41, mais en agissant alors sur le seul organe de commande en rotation 46 restant encore dans ce but sur celle-ci, il est possible, si désiré, d'ouvrir à nouveau la pince de suspension 14, par exemple pour une dépose de la ligne électrique aérienne 10 qu'elle contient.

Lors de cette ouverture, la vis de serrage 41 entraîne avec elle, dans le sens opposé au précédent, l'ensemble de serrage 23, par l'épaulement 68 de sa collerette 51.

Dans la variante de réalisation représentée sur la figure 13, la cheminée de vissage 52 de la pince de suspension 14 est, comme précédemment, ouverte localement par une fente 53', pour faire frein, mais, dans la forme de réalisation représentée, cette fente 53' s'étend longitudinalement.

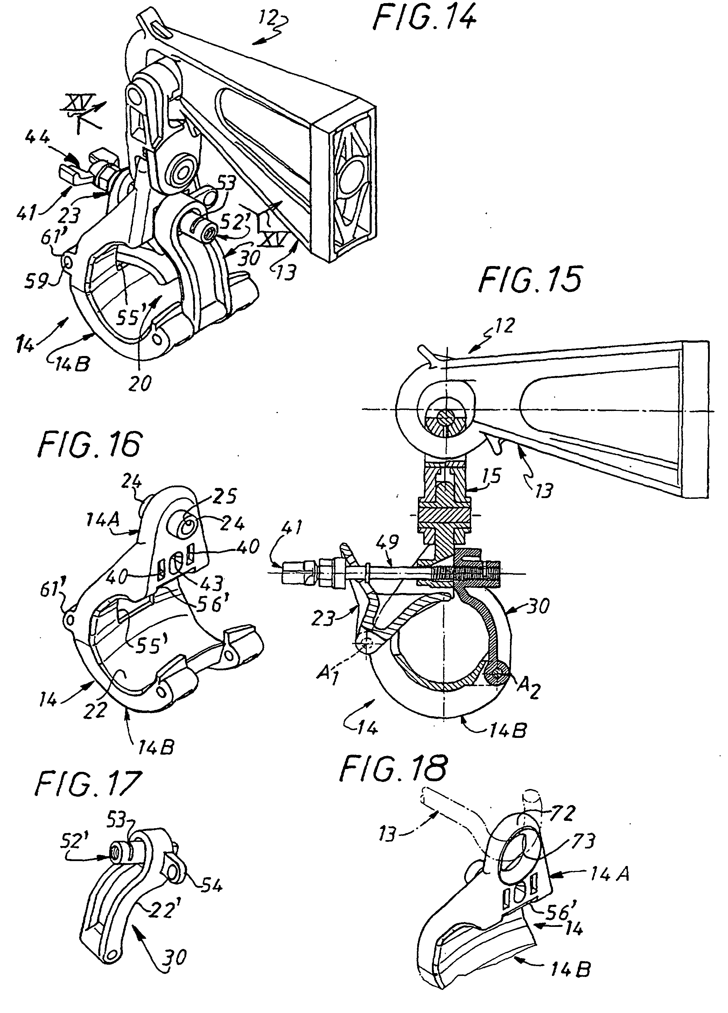

Dans la variante de réalisation représentée sur les figures 14 à 17, l'ouverture 20 de la partie inférieure 14B de la pince de suspension 14 intervient du côté du support 13, et il en est donc de même de la bride de fermeture 30.

Mais l'ensemble de serrage 23 est alors articulé à la partie inférieure 14B de la pince de suspension 14 du côté de celle-ci opposé à la bride de fermeture 30, et il traverse cette partie inférieure 14B à la faveur d'une ouverture 55' prévue à cet effet dans celle-ci.

Conjointement, la tête 44 de la vis de serrage 41 intervient de l'autre côté de la partie supérieure 14A de la pince de suspension 14 par rapport à la bride de fermeture 30, son fût 49 traverse librement la partie supérieure 14A de cette pince de suspension 14 à la faveur du perçage 43 de celle-ci, et, pour coopération avec le tronçon fileté 48 de son fût 49, la bride de fermeture 30 comporte une cheminée de vissage 52'.

Grâce à cette inversion des dispositions par rapport aux précédentes, la tête 44 de la vis de serrage 41 intervient encore avantageusement du côté de la pince de suspension 14 opposé au support 13.

Pour le montage pivotant de l'ensemble de serrage 23, la partie inférieure 14B de la pince de suspension 14 présente, à son dos, deux oreilles 61', avec lesquelles cet ensemble de serrage 23 est en prise en rotation par ses tourillons 59.

Pour le reste, les dispositions sont globalement du même type que les précédentes.

En particulier, les oreilles 61' de la pince de suspension 14 présentent, chacune, une échancrure, non visible sur les figures, pour permettre la mise en place de l'ensemble de serrage 23 par simple encliquetage.

En outre, la partie supérieure 14A de la pince de suspension 14 comporte, encore, comme précédemment, un dégagement 56' à sa base, pour l'encastrement de l'extrémité du patin de serrage 56 de l'ensemble de serrage 23.

Par contre, dans la forme de réalisation représentée, la bride de fermeture 30 ne comporte plus de dégagement 56" comparable.

Mais il peut y être prévu si désiré.

Dans la variante de réalisation représentée sur la figure 18, et tel que schématisé en traits interrompus sur celle-ci, le support 13 est un simple crochet.

La partie supérieure 14A de la pince de suspension 14 comporte, dès lors, pour sa suspension, un oeillet 72.

Préférentiellement, et tel que représenté, cet oeillet 72 est renforcé intérieurement par un revêtement métallique 73.

## Revendications

1. Pince de suspension, notamment pour ligne électrique aérienne, du genre comportant une partie supérieure (14A), par laquelle elle est adaptée à être suspendue à un support (13), et une partie inférieure (14B), par laquelle elle est adaptée à recevoir une partie au moins de la ligne électrique aérienne (10) à suspendre, cette partie inférieure (14B) ayant une section transversale ouverte et formant, en dessous de son ouverture (20), un berceau (22) allongé, avec, associé à ce berceau (22), une bride de fermeture (30), qui, montée pivotante autour d'un axe (A2) parallèle à la direction d'allongement (D) du berceau (22), est apte à fermer à la demande la section transversale de la partie inférieure (14B), en s'étendant alors de l'une à l'autre des deux extrémités de celle-ci, laissant alors à la ligne électrique aérienne toute liberté de coulissement, la bride de fermeture (30) étant associée à un ensemble de serrage (23), **caractérisée en ce que** ledit ensemble de serrage (23) est monté pivotant autour d'un second axe (A1) parallèle à la direction d'allongement (D) du berceau (22).

2. Pince de suspension suivant la revendication 1, **caractérisée en ce que** la bride de fermeture (30) est articulée à la partie inférieure (14B) le long de l'extrémité libre (28) de celle-ci.

3. Pince de suspension suivant la revendication 2, **caractérisée en ce que** la bride de fermeture (30) comporte, à son extrémité libre, une patte d'appui (38), par laquelle elle est apte à être appliquée contre la partie supérieure (14A) en position de fermeture.

4. Pince de suspension suivant l'une quelconque des revendications 1 à 3, **caractérisée en ce que** des moyens d'emboîtement (39, 40) sont prévus de manière complémentaire sur elle et sur la bride de fermeture (30), pour coopération en engagement relatif de ces moyens d'emboîtement (39, 40) les uns avec les autres lorsque la bride de fermeture (30) est en position de fermeture.

5. Pince de suspension suivant les revendications 3 et 4, prises conjointement, **caractérisée en ce que** les moyens d'emboîtement (39, 40) prévus entre elle et la bride de fermeture (30) comportent, en saillie sur la patte d'appui (38) de la bride de fermeture (30), au moins un bossage (39), et, en creux sur la partie supérieure (14A), au moins une cavité (40), qui, disposée en correspondance avec le bossage (39), est apte à recevoir celui-ci.

6. Pince de suspension suivant la revendication 5, **caractérisée en ce que** les moyens d'emboîtement (39, 40) prévus entre elle et la bride de fermeture (30) comportent, disposés à distance l'un de l'autre, sur la patte d'appui (38) de la bride de fermeture (30), deux bossages (39), et, en correspondance sur la partie supérieure (14A), deux cavités (40).

7. Pince de suspension suivant l'une quelconque des revendications 1 à 6, **caractérisée en ce que** la bride de fermeture (30) est sous le contrôle d'une vis de serrage (41), qui, disposée transversalement par rapport à la direction d'allongement (D) du berceau (22), est apte à en assurer à la demande le maintien en position de fermeture.

8. Pince de suspension suivant les revendications 3 et 7, prises conjointement, **caractérisée en ce que** la vis de serrage (41) traverse la patte d'appui (38) de la bride de fermeture (30) et la partie supérieure (14A).

9. Pince de suspension suivant la revendication 8, **caractérisée en ce que** la tête (44) de la vis de serrage (41) intervient du même côté de la partie supérieure (14A) que la bride de fermeture (30), son fût (49) traverse cette dernière à la faveur d'un perçage (42) prévu à cet effet dans la patte d'appui (38) de cette bride de fermeture (30), et, pour coopération avec le tronçon fileté (48) de son fût (49), la partie supérieure (14A) comporte, en correspondance, une cheminée de vissage (52).

10. Pince de suspension suivant la revendication 9, **caractérisée en ce que** le perçage (42) de la bride de fermeture (30) est taraudé, et la longueur axiale du tronçon fileté (48) du fût (49) de la vis de serrage (41) est suffisante pour que, pour une position de simple fermeture de l'ensemble, ce tronçon fileté (48) soit en prise à la fois avec la cheminée de vissage (52) de la partie supérieure (14A), du côté de son extrémité libre, et à la fois avec le perçage (42) de la bride de fermeture (30), du côté de la tête (44) de la vis de serrage (41).

11. Pince de suspension suivant la revendication 8, **caractérisée en ce que** la tête (44) de la vis de serrage (41) intervient de l'autre côté de la partie supérieure (14A) par rapport à la bride de fermeture (30), son fût (49) traverse la partie supérieure (14A), et, pour coopération avec le tronçon fileté (48) de son fût (49), la bride de fermeture (30) comporte une cheminée de vissage (52').

12. Pince de suspension suivant l'une quelconque des revendications 9 à 11, **caractérisée en ce que** la cheminée de vissage (52, 52') est ouverte localement par au moins une fente (53, 53').

13. Pince de suspension suivant l'une quelconque des revendications 7 à 12, **caractérisée en ce que** la tête (44) de la vis de serrage (41) comporte, à distance l'un de l'autre, deux organes de commande en rotation (45, 46) séparés l'un de l'autre par une zone frangible (47).

14. Pince de suspension suivant l'une quelconque des revendications 1 à 13, **caractérisée en ce que** la bride de fermeture (30) est équipée d'une patte de préhension (54).

15. Pince de suspension suivant la revendication 14, **caractérisée en ce que** la patte de préhension (54) de la bride de fermeture (30) fait saillie latéralement.

16. Pince de suspension suivant l'une quelconque des revendications 1 à 15, **caractérisée en ce que** l'ensemble de serrage (23) est articulé à la bride de fermeture (30) et traverse celle-ci à la faveur d'une ouverture (55) prévue à cet effet dans cette dernière.

17. Pince de suspension suivant les revendications 9 et 16, prises conjointement, **caractérisée en ce qu'**il est prévu, sur la bride de fermeture (30), à la base de sa patte d'appui (38), en continuité avec son ouverture (55), un dégagement (56") propre à recevoir l'ensemble de serrage (23).

18. Pince de suspension suivant l'une quelconque des revendications 1 à 15, **caractérisée en ce que** l'ensemble de serrage (23) est articulé à la partie inférieure (14B) du côté de celle-ci opposé à la bride de fermeture (30), et il traverse cette partie inférieure (14B) à la faveur d'une ouverture (55') prévue à cet effet dans celle-ci.

19. Pince de suspension suivant l'une quelconque des revendications 16 et 18, **caractérisée en ce qu'**il est prévu, à la base de la partie supérieure (14A), un dégagement (56') propre à recevoir l'ensemble de serrage (23).

20. Pince de suspension suivant l'une quelconque des revendications 16 à 19, **caractérisée en ce que** l'ensemble de serrage (23), qui comporte un levier de commande (57), est sous le contrôle de la même vis de serrage (41) que la bride de fermeture (30), le fût (49) de cette vis de serrage (41) traversant librement son levier de commande (57) en présentant deux épaulements (67, 68) de part et d'autre de celui-ci pour son entraînement dans les deux sens.

21. Pince de suspension suivant la revendication 20, **caractérisée en ce que**, pour coopération en contact avec les épaulements (67, 68) de la vis de serrage (41), le levier de commande (57) de l'ensemble de serrage (23) présente en saillie des bossages arrondis (70, 71).

22. Pince de suspension suivant l'une quelconque des revendications 16 à 21, **caractérisée en ce que**, l'ensemble de serrage (23) comportant latéralement deux tourillons (59) par lesquels il est en prise à rotation avec des oreilles (61, 61'), ces oreilles (61, 61') présentent chacune une échancrure (62) permettant une mise en place de cet ensemble de serrage (23) par simple encliquetage.

23. Pince de suspension suivant l'une quelconque des revendications 1 à 22, **caractérisée en ce que** le berceau (22) que forme la partie inférieure (14B) va en s'évasant à chacune de ses extrémités.

24. Pince de suspension suivant l'une quelconque des revendications 1 à 23, **caractérisée en ce que** sa partie supérieure (14A) comportant, pour sa suspension, deux tourillons (24), ces tourillons (24) sont creusés d'un alésage (25) qui leur est commun, et un axe de renfort (26) s'étend intérieurement de l'un à l'autre d'entre eux.

25. Pince de suspension suivant l'une quelconque des revendications 1 à 23, **caractérisée en ce que** sa partie supérieure (14A) comportant, pour sa suspension, un oeillet (72), cet oeillet (72) est renforcé intérieurement par un revêtement métallique (73).

26. Suspension pour une ligne électrique aérienne du genre comportant un support (13) et une pince de suspension (14) suspendue à ce support (13), soit directement, soit indirectement, **caractérisée en ce que** la pince de suspension (14) est conforme à l'une quelconque des revendications 1 à 25.

27. Suspension suivant la revendication 26, **caractérisée en ce que**, le support étant une console, la pince de suspension (14) est attelée à ce support par l'intermédiaire d'une manille (15).

28. Suspension suivant l'une quelconque des revendications 26, 27, **caractérisée en ce que** la tête (44) de la vis de serrage (41) sous le contrôle de laquelle est la bride de fermeture (30) de la pince de suspension (14) intervient du côté de cette pince de suspension (14) opposé au support (13).

## Patentansprüche

1. Halteklammer, insbesondere für elektrische Freileitungen, von der Art, welche einen oberen Abschnitt (14A) aufweist, mit dessen Hilfe sie an einem Träger (13) aufhängbar ist, sowie einen unteren Abschnitt (14B), mit dessen Hilfe sie mindestens einen Abschnitt der abzuhängenden elektrischen Freileitung (10) aufnehmen kann, wobei dieser untere Abschnitt (14B) einen offenen Querschnitt und unter seiner Öffnung (20) einen lang gestreckten offenen Aufnahmekanal (22) mit einem mit diesem Aufnahmekanal (22) verbundenen Schließbügel (30) aufweist, der um eine Achse (A2) drehbar parallel zur Richtung der Längserstreckung (D) des offenen Aufnahmekanals (22) angebracht ist und dazu geeignet ist, auf Anforderung den Querschnitt des unteren Abschnitts (14B) zu schließen, indem er sich nun vom einen von dessen beiden Enden zum anderen Ende erstreckt und nun der elektrischen Freileitung jede Freiheit zum Gleiten lässt, wobei der Schließbügel (30) mit einer Spannbaugruppe (23) verbunden ist, **dadurch gekennzeichnet, dass** die Spannbaugruppe um eine zweite Achse (A1) drehbar angebracht ist, welche parallel zur Richtung der Längserstreckung (D) des offenen Aufnahmekanals (22) verläuft.

2. Halteklammer nach Anspruch 1, **dadurch gekennzeichnet, dass** der Schließbügel (30) an seinem unteren Abschnitt (14B) entlang des freien Endes (28) desselben angelenkt ist.

3. Halteklammer nach Anspruch 2, **dadurch gekennzeichnet, dass** der Schließbügel (30) an seinem freien Ende eine Auflagelasche (38) aufweist, mit welcher er in der Schließstellung gegen den oberen Abschnitt (14A) anlegbar ist.

4. Halteklammer nach einem der Ansprüche 1 bis 3, **dadurch gekennzeichnet, dass** Einsteckmittel (39, 40) in komplementärer Weise auf der Klammer und auf dem Schließbügel (30) vorgesehen sind, welche unter relativem Eingriff zum Zusammenwirken dieser Einsteckmittel (39, 40) mit einander vorgesehen sind, wenn sich der Schließbügel (30) in seiner Schließstellung befindet.

5. Halteklammer nach Anspruch 3 in Verbindung mit Anspruch 4, **dadurch gekennzeichnet, dass** die Einsteckmittel (39, 40), die zwischen der Klammer und dem Schließbügel (30) vorgesehen sind, mindestens eine Erhebung (39) aufweisen, die über die Auflagelasche (38) des Schließbügels (30) vorsteht, sowie mindestens eine Vertiefung (40), die in dem oberen Abschnitt (14A) eingelassen ist und deckungsgleich mit der Erhebung (39) so angeordnet ist, dass sie diese aufnehmen kann.

6. Halteklammer nach Anspruch 5, **dadurch gekennzeichnet, dass** die zwischen der Klammer und dem Schließbügel (30) angeordneten Einsteckmittel (39, 40) zwei im Abstand von einander vorgesehene und auf der Auflagelasche (38) des Schließbügels (30) ausgebildete Erhebungen (39) und damit deckungsgleich auf dem oberen Abschnitt (14A) zwei Vertiefungen (40) aufweisen.

7. Halteklammer nach einem der Ansprüche 1 bis 6, **dadurch gekennzeichnet, dass** der Schließbügel (30) sich im Einflussbereich einer Spannschraube (41) befindet, welche, bezogen auf die Richtung der Längserstreckung (D) des offenen Aufnahmekanals (22), quer angeordnet und in der Lage ist, auf Anforderung in der Schließstellung die Halterung darin sicher zu stellen.

8. Halteklammer nach Anspruch 3 in Verbindung mit Anspruch 7, **dadurch gekennzeichnet, dass** die Spannschraube (41) durch die Auflagelasche (38) des Schließbügels (30) und den oberen Abschnitt (14A) hindurch geführt ist.

9. Halteklammer nach Anspruch 8, **dadurch gekennzeichnet, dass** der Kopf (44) der Spannschraube (41) von derselben Seite des oberen Abschnitts (14A) her wie der Schließbügel (30) so wirksam ist, dass ihr Schaft (49) durch letzteren hindurch mit Hilfe einer Bohrung (42) hindurchgeführt ist, die zu diesem Zweck in der Auflagelasche (38) dieses Schließbügels (30) vorgesehen ist, und dass zum Zusammenwirken mit dem Gewindeabschnitt (48) des Schafts (49) der obere Abschnitt (14A) in Entsprechung hierzu eine Schraubbahn (52) aufweist.

10. Halteklammer nach Anspruch 9, **dadurch gekennzeichnet, dass** die Bohrung (42) im Schließbügel ein Gewinde aufweist und die Länge des Gewindeabschnitts (48) auf dem Schaft (49) der Spannschraube in axialer Richtung ausreicht, damit bei einer einfachen Schließstellung der gesamten Anordnung dieser Gewindeabschnitt (48) auf der Seite seines freien Endes in Eingriff mit der Schraubbahn (52) des oberen Abschnitts (14A) und zur gleichen Zeit in Eingriff mit der Bohrung (42) des Schließbügels (30) auf der Seite des Kopfes (44) der Spannschraube (41) steht.

11. Halteklammer nach Anspruch 8, **dadurch gekennzeichnet, dass** der Kopf (44) der Spannschraube (41) von der anderen Seite des oberen Abschnitts (14A) her, bezogen auf den Schließbügel (30), mit ihrem Schaft (49) durch den oberen Abschnitt (14A) geführt ist und zum Zusammenwirken mit dem Gewindeabschnitt (48) auf dem Schaft (49) derselben der Schließbügel (30) eine Schraubbahn (52') aufweist.

12. Halteklammer nach einem der Ansprüche 9 bis 11, **dadurch gekennzeichnet, dass** die Schraubbahn (52, 52') örtlich begrenzt mittels mindestens eines Schlitzes (53, 53') offen ist.

13. Halteklammer nach einem der Ansprüche 7 bis 12, **dadurch gekennzeichnet, dass** der Kopf (44) der Spannschraube (41) zwei von einander beabstandete drehbare Betätigungselemente (45, 46) aufweist, die durch einen aufbrechbaren Bereich (47) von einander getrennt sind.

14. Halteklammer nach einem der Ansprüche 1 bis 13, **dadurch gekennzeichnet, dass** der Schließbügel (30) mit einer Grifflasche (54) versehen ist.

15. Halteklammer nach Anspruch 14, **dadurch gekennzeichnet, dass** die Grifflasche (54) des Schließbügels (30) seitlich vorsteht.

16. Halteklammer nach einem der Ansprüche 1 bis 15, **dadurch gekennzeichnet, dass** die Spannbaugruppe (23) an dem Schließbügel (30) angelenkt ist und diesen mittels einer Öffnung (55) durchzieht, die zu diesem Zweck in dem Schließbügel vorgesehen ist.

17. Halteklammer nach Anspruch 9 in Verbindung mit Anspruch 16, **dadurch gekennzeichnet, dass** auf dem Schließbügel (30) an der Basis von deren Auflagelasche (38) in kontinuierlichem Anschluss mit deren Öffnung (55) eine Unterschneidung (56") vorgesehen ist, die zur Aufnahme der Spannbaugruppe (23) in geeigneter Weise ausgelegt ist.

18. Halteklammer nach einem der Ansprüche 1 bis 15, **dadurch gekennzeichnet, dass** die Spannbaugruppe (23) an dem unteren Abschnitt (14B) auf der Seite der letzteren angelenkt ist, welche dem Schließbügel (30) gegenüber liegt, und diesen unteren Abschnitt (14B) mittels einer Öffnung (55') durchzieht, welche zu diesem Zweck in diesem Abschnitt vorgesehen ist.

19. Halteklammer nach einem der Ansprüche 16 und 18, **dadurch gekennzeichnet, dass** an der Basis des oberen Abschnitts (14A) eine Unterschneidung (56') vorgesehen ist, die zur Aufnahme der Spannbaugruppe (23) in geeigneter Weise ausgelegt ist.

20. Halteklammer nach einem der Ansprüche 16 bis 19, **dadurch gekennzeichnet, dass** die Spannbaugruppe (23), die einen Betätigungshebel (57) umfasst, sich im Einflussbereich derselben Spannschraube (41) wie der Schlussbügel (30) befindet, wobei der Schaft (49) dieser Spannschraube (41) frei durch seinen Betätigungshebel (57) verläuft und dabei zwei Schultern (67, 68) zu seinen beiden Seiten für seinen Antrieb in beide Richtungen aufweist.

21. Halteklammer nach Anspruch 20, **dadurch gekennzeichnet, dass** zum Zusammenwirken in Berührung mit den Schultern (67, 68) der Spannschraube (41) der Betätigungshebel (57) der Spannbaugruppe (23) vorspringende abgerundete Erhebungen (70, 71) aufweist.

22. Halteklammer nach einem der Ansprüche 16 bis 21, **dadurch gekennzeichnet, dass** die Spannbaugruppe (23) seitlich zwei Drehzapfen (59) aufweist, mit deren Hilfe sie mit Ösen (61, 61') zusammen drehbeweglich in Eingriff steht, wobei diese Ösen (61, 61') jeweils einen bogenförmiger Ausschnitt (62) aufweisen, welcher eine Anordnung dieser Spannbaugruppe (23) durch einfaches Einrasten ermöglicht.

23. Halteklammer nach einem der Ansprüche 1 bis 22, **dadurch gekennzeichnet, dass** der offene Aufnahmekanal (22), den der untere Abschnitt (14B) ausbildet (14B), sich an jedem dieser Enden erweitert.

24. Halteklammer nach einem der Ansprüche 1 bis 23, **dadurch gekennzeichnet, dass** ihr oberer Abschnitt (14A) zu seiner Aufhängung zwei Drehzapfen (24) aufweist, wobei in diese Drehzapfen (24) eine ihnen gemeinsame Bohrung (25) eingelassen ist, und dass sich eine Verstärkungsachse (26) im Inneren zwischen diesen beiden vom einen zum anderen erstreckt.

25. Halteklammer nach einem der Ansprüche 1 bis 23, **dadurch gekennzeichnet, dass** ihr oberer Abschnitt (14A) zu seiner Aufhängung eine Öse (72) aufweist, wobei diese Öse (72) innen mittels eines metallischen Überzugs (73) verstärkt ist.

26. Aufhängung für eine elektrische Freileitung von der Art, welche einen Träger (13) und eine Halteklammer (14) aufweist, welche an diesem Träger (13) direkt oder indirekt aufgehängt ist, **dadurch gekennzeichnet, dass** die Halteklammer (14) nach einem der Ansprüche 1 bis 25 ausgelegt ist.

27. Aufhängung nach Anspruch 26, **dadurch gekennzeichnet, dass** der Träger eine Konsole ist, wobei die Halteklammer (14) an diesem Träger mit Hilfe eines Schäkels (15) angehängt ist.

28. Aufhängung nach einem der Ansprüche 26, 27, **dadurch gekennzeichnet, dass** der Kopf (44) der Spannschraube (41), in deren Einflussbereich sich der Schließbügel (30) der Halteklammer (14) befindet, von der Seite dieser Halteklammer (14) aus wirksam ist, die dem Träger (13) gegenüber liegt.

## Claims

1. Suspension clamp, in particular for overhead electrical power lines, of the kind including a top part (14A) adapted to be suspended from a support (13), and a bottom part (14B), adapted to receive at least a portion of the overhead electrical power line (10) to be suspended, the bottom part (14B) having an open cross-section and below its opening (20) forming an elongate cradle (22) with, associated with the cradle (22), a closure clamp (30) pivoting about an axis (A2) parallel to the lengthwise direction (D) of the cradle (22) and adapted to close the cross-section of the bottom part (14B) when required, extending from one of the two ends thereof to the other so that the overhead electrical power line is entirely free to slide, the closure clamp (30) being associated with a clamping system (23), **characterized in that** said clamping system (23) pivots about a second axis (A1) parallel to the lengthwise direction (D) of the cradle (22).

2. Suspension clamp according to claim 1 **characterized in that** the closure clamp (30) is articulated to the bottom part (14B) along its free end (28).

3. Suspension clamp according to claim 2 **characterized in that** the closure clamp (30) has a bearing lug (38) at its free end adapted to be pressed against the top part (14A) in its closed position.

4. Suspension clamp according to any of claims 1 to 3 **characterized in that** nesting means (39, 40) are provided in a complementary manner on it and on the closure clamp (30) to cooperate through relative interengagement of the nesting means (39, 40) with each other when the closure clamp (30) is in its closed position.

5. Suspension clamp according to claim 3 in conjunction with claim 4 **characterized in that** the nesting means (39, 40) between it and the closure clamp (30) include at least one boss (39) projecting from the bearing lug (38) of the closure clamp (30) and at least one cavity (40) recessed into the top part (14A) in corresponding relationship with the boss (39) and adapted to receive it.

6. Suspension clamp according to claim 5 **characterized in that** the nesting means (39, 40) between it and the closure clamp (30) include two bosses (39) on the bearing lug (38) of the closure clamp (30) and two cavities (40) in corresponding relationship thereto on the top part (14A).

7. Suspension clamp according to any of claims 1 to 6 **characterized in that** the closure clamp (30) is under the control of a clamping screw (41) transverse to the lengthwise direction (D) of the cradle (22) and adapted to hold it in a closed position when required.

8. Suspension clamp according to claim 3 in conjunction with claim 7 **characterized in that** the clamping screw (41) passes through the bearing lug (38) of the closure clamp (30) and the top part (14A).

9. Suspension clamp according to claim 8 **characterized in that** the head (44) of the clamping screw (41) is on the same side of the top part (14A) as the closure clamp (30), its shank (49) passes through a bore (42) provided for this purpose in the bearing lug (38) of the closure clamp (30) and, for cooperation with the threaded portion (48) of its shank (49), the top part (14A) has in corresponding relation to it a threaded bush (52).

10. Suspension clamp according to claim 9 **characterized in that** the bore (42) of the closure clamp (30) is threaded and the axial length of the threaded portion (48) of the shank (49) of the clamping screw (41) is sufficient for the threaded portion (48) in an initial closed position to be engaged both with the threaded bush (52) of the top part (14A) at its free end and with the bore (42) in the closure clamp (30) at the end towards the head (44) of the clamping screw (41).

11. Suspension clamp according to claim 8 **characterized in that** the head (44) of the clamping screw (41) is on the opposite side of the top part (14A) to the closure clamp (30), its shank (49) passes through the top part (14A) and, for cooperation with the threaded portion (48) of its shank (49), the closure clamp (30) includes a threaded bush (52').

12. Suspension clamp according to any of claims 9 to 11 **characterized in that** the threaded bush (52, 52') is split locally by at least one slot (53, 53').

13. Suspension clamp according to any of claims 7 to 12 **characterized in that** the head (44) of the clamping screw (41) has two rotation control members (45, 46) separated from each other by a frangible area (47).

14. Suspension clamp according to any of claims 1 to 13 **characterized in that** the closure clamp (30) has a holding lug (54).

15. Suspension clamp according to claim 14 **characterized in that** the holding lug (54) of the closure clamp (30) projects laterally.

16. Suspension clamp according to any of claims 1 to 15 **characterized in that** the clamping system (23) is articulated to the closure clamp (30) and passes through an opening (55) provided therein for this purpose.

17. Suspension clamp according to claim 9 in conjunction with claim 16 **characterized in that** a recess (56") adapted to receive the clamping system (23) is provided on the closure clamp (30) at the base of its bearing lug (38) in continuity with its opening (55).

18. Suspension clamp according to any of claims 1 to 15 **characterized in that** the clamping system (23) is articulated to the bottom part (14B) on the opposite side thereof to the closure clamp (30) and passes through an opening (55') provided in the bottom part (14B) for this purpose.

19. Suspension clamp according to claim 16 or claim 18 **characterized in that** a recess (56') adapted to receive the clamping system (23) is provided at the base of the top part (14A).

20. Suspension clamp according to any of claims 16 to 19 **characterized in that** the clamping system (23) includes an operating lever (57) and is under the control of the same clamping screw (41) as the closure clamp (30), the shank (49) of the clamping screw (41) passing freely through its operating lever (57) and having two shoulders (67, 68) on respective opposite sides thereof for driving it both ways.

21. Suspension clamp according to claim 20 **characterized in that** to cooperate by contact with the shoulders (67, 68) of the clamping screw (41) the operating lever (57) of the clamping system (23) has projecting rounded bosses (70, 71).

22. Suspension clamp according to any of claims 16 to 21 **characterized in that** the clamping system (23) includes laterally two journals (59) rotatably engaged with lugs (61, 61') each having a notch (62) enabling the clamping system (23) to be fitted by simply clipping it into place.

23. Suspension clamp according to any of claims 1 to 22 **characterized in that** the cradle (22) formed by the bottom part (14B) flares outwardly at each end.

24. Suspension clamp according to any of claims 1 to 23 **characterized in that** its top part (14A) includes two journals (24) for suspending it, the journals (24) have a common bore (25) and a reinforcing shaft (26) extends internally from one journal to the other.

25. Suspension clamp according to any of claims 1 to 23 **characterized in that** its top part (14A) includes an eyelet (72) for suspending it and the eyelet (72) is reinforced internally by a metallic coating (73).

26. Suspension for an overhead electrical power line of the kind including a support (13) and a suspension clamp (14) suspended from the support (13) either directly or indirectly, **characterized in that** the suspension clamp (14) is a clamp according to any of claims 1 to 25.

27. Suspension according to claim 26 **characterized in that** the support is a bracket and the suspension clamp (14) is coupled to the support by means of a shackle (15).

28. Suspension according to claim 26 or claim 27 **characterized in that** the head (44) of the clamping screw (41) controlling the closure clamp (30) of the suspension clamp (14) is on the opposite side of the suspension clamp (14) to the support (13).
